# EUROPEAN PATENT APPLICATION

(11) **EP 0 580 288 A1**
(43) Date of publication of application: **26.01.1994**
(21) Application number: 93304677.3
(22) Date of filing: 16.06.1993
(51) Int. Cl.: H02G 3/06

(54) **Cable gland**

(30) Priority: 20.07.1992 GB 9215369
(71) Applicant: C M P (UK) Limited, St Peter's, Newcastle-Upon-Tyne NE6 1BE (GB)
(72) Inventor: Sowerby, John David, Cramlington, Northumberland NE23 7XE (GB)
(74) Representative: Hale, Peter

(57) **Abstract**

A cable gland comprises a compression nut, a gland body and a cable armour clamping comprising a ring and a sleeve having complementarily formed divergent external and internal surfaces, respectively. The clamping sleeve is held captive within the gland body. The compression nut is drawn onto the threads of the gland body to effect clamping of cable armour wire between the divergent surfaces. When the compression nut is released the captive clamping sleeve is held with the gland body and cannot be mislaid.

## Description

The present invention relates to cable glands and is particularly applicable to a cable gland used at the junction where a cable passes through an aperture, for example in a housing.

Cable glands are commonly used in conjunction with cables which carry large currents or are subjected to large voltages. When these glands are used in hazardous conditions, it is of vital importance to minimise the number of components, particularly loose components, in order to make the gland easier to remove with the minimum of concern for mislaying components.

It is therefore an object of the present invention to provide a cable gland with fewer loose components.

According to the invention, there is provided a cable gland comprising a compression member, cable armour clamping means, and a gland body; the cable armour clamping means comprising an armour ring having an axially divergent external profile and a clamping sleeve having an axially divergent internal profile; the clamping sleeve being captive within the gland body; the gland body being threadedly connected to the compression member to locate the ring partly within the compression member and partly within the clamping sleeve.

Preferably the gland also includes an entry component, the entry component and compression member being threadedly connected. Preferably, the axially divergent profiles of the clamping ring and sleeve are part-conical. Preferably, a captive unit is threadedly connected to the gland body at the opposite end to the compression member.

The entry component preferably includes a threaded end region which can engage a correspondingly threaded aperture. Alternatively, the threaded end region can be passed through a simple hole and fixed in position by means of a suitable nut. The entry component also preferably houses an inner seal of a resilient material such as neoprene, silicone rubber, etc. Such a seal would be compressed when the compression member is tightened down on the entry component, thus causing the seal to bulge radially inwards to grip the cable.

Similarly, the captive nut also preferably houses a similar outer seal of resilient material which grips the cable in a similar way when the captive nut is tightened down on to the gland body. The captive nut preferably includes a ferrule of nylon, brass or some other suitable material at the rear end where the cable leaves the gland.

The fact that the clamping sleeve is captive within the gland body reduces the number of loose components and renders the gland easier to make off without concern for losing components. In addition, it ensures that the sleeve cannot be fitted incorrectly, i.e. with the divergent or tapered portion in reverse.

Preferably, the clamping sleeve is threadedly connected within the gland body and held captive preferably by its being screwed down on to a shoulder formed on the inside surface of the gland body. Because the sleeve is screwed into the gland body, when the gland has been fitted on to the cable, the body can be unscrewed from the compression member, leaving the sleeve crimped on to the armour ring and the cable armouring secured in position. This maintains electrical continuity when the gland is disassembled and ensures that the cable armouring remains relatively undisturbed. This is also important for inspection purposes.

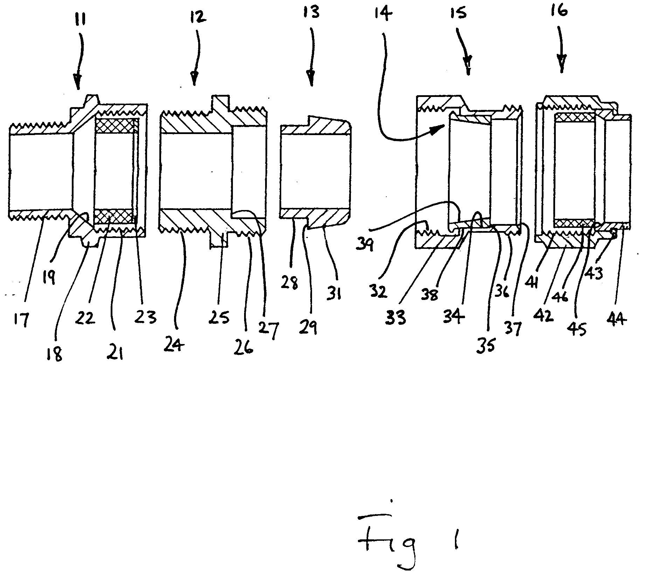

The invention may be carried into practice in various ways and one embodiment will now be described with reference to and as shown in the accompanying drawings, in which the single figure is an exploded vertical section through a cable gland in accordance with the present invention.

The cable gland comprises an entry component 11 a compression member 12, an armour cone 13, a clamping sleeve 14, a gland body 15 and a captive nut 16. All these components have a central axial bore to accommodate a cable.

The entry component 11 has a threaded front portion 17 terminating in a shoulder 18, a hexagonal outer ring 18 for engagement by a spanner, an inner inclined surface 19, and a rear internal threaded section 21. The front portion 17 is arranged either to co-operate with a threaded entry aperture in a housing or the like, or to pass through a hole in a housing wall to be locked in position with a nut. Located within the entry component 11, to the rear of the inclined surface 19 is a neoprene sealing ring 22 and a skid washer 23.

The compression member 12 has a threaded front portion 24, a hexagonal outer ring 25 for engagement by a spanner, a rear outer threaded section 26 and an internal shoulder 27 facing rearwards. The threaded front portion 24 arranged to engage the internal threaded section 21 in the entry component 11. When tightened, in this way, the compression member abuts the skid washer 23 and compresses the sealing ring 22, causing it to bulge inwards to grip the cable (not shown).

The armour cone 13 comprises a plain cylindrical forward portion 28, a shoulder 29 and a rearwardly inwardly inclined part-conical portion 31. The forward portion fits within the rear part of the compression member 12 to an extent limited by one or both of the two shoulders 27,29.

The gland body 15 has an internally-threaded front portion 32, a hexagonal outer profile 33 at its forward end for engagement with a spanner, a central internally-threaded section 34 terminating at a shoulder 35, a rear externally threaded portion 36 and an inwardly inclined rear surface 37. The clamping sleeve 14 has a threaded outer surface 38 and a part-conical inner surface 39. The threaded outer surface 38 engages the central threaded section of the gland body 15. The threaded front portion 32 of the gland body 15 engages the rear threaded section 26 of the compression member 12, and as these two components are tightened, the two part-conical surfaces 31, 39 close on one another. This provides a clamping zone for the armouring of the cable (not shown).

The captive nut 16 has an internally-threaded portion 41, a hexagonal outer profile 42 for engagement with a spanner and an inwardly turned-down flange 43 at the rear. A nylon ferrule 44 is held by the flange 43; the ferrule 44, has a forward inclined face 45. A sealing ring 46 is located within the nut 16. The threaded portion 41 engages the rear threaded portion 36 on the gland body 15 and as these two components are tightened, the sealing ring 46 is compressed between the inclined surfaces 37,45. This causes the ring 46 to bulge inwards, thus gripping the cable (not shown).

As will be appreciated, when an assembled gland is disassembled, for example, for inspection purposes, by unscrewing the gland body 15, the clamping sleeve 14 remains crimped in position on the armour cone 13, ensuring that the cable armouring remains relatively undisturbed.

## Claims

1. A cable gland comprising: a compression member; cable armour clamp means; and a gland body, the cable armour clamp means comprising an armour ring, having an axially divergent external profile, and a clamping sleeve, having an axially divergent internal profile; the clamping sleeve being captive within the gland body and the gland body being threadedly connected with the compression member to locate the ring partly within the compression member and partly within the clamping sleeve.

2. A cable gland as claimed in claim 1 in which the gland also includes an entry component, the entry component and compression member being threadedly connected.

3. A cable gland as claimed in claim 1 or 2 in which the axially divergent profiles of the clamping ring and sleeve are part-conical.

4. A cable gland as claimed in claim 1, 2 or 3 in which a captive nut is threadedly connected to the gland body at the opposite end to the compression member.

5. A cable gland as claimed in any of claims 1 to 4 in which the clamping sleeve is threadedly connected within the gland body.

6. A cable gland as claimed in claim 5 in which the clamping sleeve is held captive by its being screwed down on to a shoulder formed on the inside surface of the gland body.

7. A cable gland as claimed in claim 4 in which the captive nut houses an outer seal of resilient material which is arranged to grip the outer surface of the cable when the captive nut is tightened down on to the gland body.

8. A cable gland as claimed in claim 7 in which the outer seal is made of neoprene or silicone rubber.

9. A cable gland as claimed in claim 4 in which the captive nut includes a ferrule at the end of the nut where, in use, the cable leaves the gland.
